# EUROPEAN PATENT SPECIFICATION

(11) **EP 3 176 066 B1**
(45) Date of publication and mention of the grant of the patent: **10.03.2021**
(21) Application number: 16201347.8
(22) Date of filing: 30.11.2016
(51) Int. Cl.: B62M 6/70, B62M 6/45

(54) **ELECTRICALLY ASSISTED BICYCLE**
ELEKTRISCH UNTERSTÜTZTES FAHRRAD
BICYCLETTE AVEC ASSISTANCE ÉLECTRIQUE

(30) Priority: 01.12.2015 JP 2015234610
(43) Date of publication of application: 07.06.2017
(73) Proprietor: Yamaha Hatsudoki Kabushiki Kaisha, Iwata-shi, Shizuoka 438-8501 (JP)
(72) Inventor: KINPARA, Yuki, Iwata-shi, Shizuoka 438-8501 (JP)
(74) Representative: Grünecker Patent- und Rechtsanwälte PartG mbB

(56) References cited:
- EP-A2- 0 517 224
- WO-A1-2012/093435
- JP-A- 2000 085 675
- JP-A- 2001 239 980
- KR-A- 20120 019 287

## Description

The present invention relates to an electrically assisted bicycle and a method for controlling an electrically assisted bicycle. Prior art document JP 2001 1239980 A discloses an electric bicycle having the drive motor for generating the self-running power in response to the operation amount of the self-propelled operation by the driver. The electric bicycle is provided with the braking control means for controlling the self-running power according to the braking operation and the vehicle speed. Said prior art explains followings modes.
(a) A non-assist mode which is executed when the throttle lever is not operated.
(b) A brake-operation mode which is executed when the throttle lever is operated, the rider is seated and the vehicle is running. This mode aims to reduce the assist torque in accordance with the operation of the brake operation.
(c) A rapid acceleration restriction mode which is executed when the throttle lever is operated, the rider is seated, the vehicle stops and the brake lever is operated. This mode is executed when the vehicle is stopping on the uphill and the user opens the throttle lever so as to not to move back. When the user opens the throttle lever excessively, this mode helps to restrict the rapid acceleration.
(d) A normal assist mode which is executed when the throttle lever is operated, the brake lever is not operated and the rider is seated.
(e) A push-walk mode which is executed when the throttle lever is operated, the brake lever is not operated, the rider is not seated. This mode generates the assist torque in accordance with the walking speed. JP 2001 239980 A discloses the features of the preambles of claims 1 - 4.

Electrically assisted bicycles are known in Japanese Patent Unexamined Publication JP-A-2000-95180 and the like which are equipped with a walk-push function in which a rider propels the bicycle by pushing it while walking with his or her hands gripping on the bicycle.

In these electrically assisted bicycles, the walk-push effort of the rider is retrieved by causing an electric motor to output walk-push assisting torque when the rider propels the bicycle by pushing it while walking on a steep upward slope after getting off the bicycle.

Incidentally, in the electrically assisted vehicle equipped with the walk-push function which is described in the JP-A-2000-95180, when attempting to output the walk-push assisting torque by operating an operating portion while stopping the bicycle on the upward slope, the vehicle is caused to move backwards along the gradient until the walk-push assisting torque is actually outputted. On the other hand, the vehicle is caused to move forwards while the walk-push assisting torque is being outputted. Because of this, it is difficult for the rider to stay with the bicycle in a position on the slope where he or she gets off the bicycle, for example.

Then, an object of the invention is to provide an electrically assisted bicycle and a method for controlling an electrically assisted bicycle which enables a rider to easily hold the bicycle to stay in a position where he or she wants to stay and also to easily release the holding state.

According to the present invention said object is solved by an electrically assisted bicycle having the features of independent claims 1 and 2. Moreover, said object is also solved by a method for controlling an electrically assisted bicycle having the features of independent claims 3 and 4.

Accordingly, there is provided an electrically assisted bicycle having
an electric motor which is adapted to apply walk-push assisting torque to a wheel of the bicycle when a rider propels the bicycle by pushing it while walking;
a control unit configured to execute a first mode in which the electric motor applies no torque to the wheel, a second mode in which the electric motor applies to the wheel stay assisting torque which allows the electrically assisted bicycle to stay in a position where the rider wants to stay and a third mode in which the electric motor applies walk-push assisting torque to the wheel, wherein
the first mode, the second mode and the third mode can be selected by using an operating unit which can be operated by the rider.

According to the electrically assisted bicycle which is configured as described above, the first mode, the second mode and the third mode can be selected by the rider operating the operating unit. Namely, the rider can select the first mode, the second mode and the third mode in a positive fashion. Owing to this, when the rider wants to stay in a certain position on an upward slope, the rider can easily execute the second mode. Alternatively, when the rider wants to move backwards on the upward slope, the rider can easily move backwards by selecting the first mode. Alternatively, when the rider attempts to propel the bicycle from the staying state by pushing it while walking on the upward slope, the rider can obtain the walk-push assisting torque by executing easily the third mode by operating the operating unit.

In this way, since the rider can select the first mode, the second mode and the third mode in the positive fashion, the output of the electric motor does not interrupt the action that the rider wants to execute, whereby the rider can select the mode which is suitable for the action that the rider wants to execute.

The electrically assisted bicycle according to the present teaching may be configured so that the operating unit has a first operating module and a second operating module which differs from the first operating module, the control unit executes the first mode when the first operating module and the second operating module are not operated, the control unit executes the second mode in such a state that the first operating module or the second operating module is operated, and the control unit executes the third mode in such a state that the first operating module and the second operating module are operated.

According to the electrically assisted bicycle configured as described above, when the rider operates the first operating module or the second operating module without distinguishing either of the first module and the second module, the torque is applied which allows the bicycle to stay in the position where the rider wants to stay, whereby the rider can easily stay with the bicycle in the position, and the convenience of the rider is enhanced.

The electrically assisted bicycle according to the present teaching may be configured so that the operating unit has a stay operating module and a walk-push operating module, the control unit executes the first mode when the stay operating module and the walk-push operating module are not operated, the control unit executes the second mode when the walk-push operating module is not operated while the stay operating module is operated, and the control unit executes the third mode when the walk-push operating module is operated irrespective of the operation of the stay operating module.

According to the electrically assisted bicycle configured as described above, the walk-push assisting torque can be obtained whenever the rider wants the walk-push assisting torque.

The electrically assisted bicycle according to the present teaching may in a non-claimed embodiment be configured so that the modes are shifted in the order of the first mode, the second mode and the third mode or in the order of the first mode, the third mode and the second mode by operating the single operating unit.

According to the electrically assisted bicycle configured as described above, since the rider can select the first mode to the third mode by operating the single operating unit, the rider can select the modes through the simple operation.

According to the invention, it is possible to provide the electrically assisted bicycle which enables the rider to easily hold the bicycle to stay in the position where he or she wants to stay and also to easily release the holding state.

### [Brief Description of Drawings]

Fig. 1 is a side view of an electrically assisted bicycle according to a first embodiment.
Fig. 2 is a block diagram showing the function of the electrically assisted bicycle according to the first embodiment.
Fig. 3 is a flowchart showing a selecting operation of selecting a third mode to a first mode in the electrically assisted bicycle according to the first embodiment.
Fig. 4 is a block diagram showing the function of an electrically assisted bicycle according to a second embodiment.
Fig. 5 is a flowchart showing a selecting operation of selecting a first mode to a third mode in the electrically assisted bicycle according to the second embodiment.
Fig. 6 is a block diagram showing the function of an electrically assisted bicycle according to a third non-claimed embodiment.
Figs. 7A and 7B are flowchart showing a selecting operation of selecting a third mode to a first mode in the electrically assisted bicycle according to the third non-claimed embodiment.

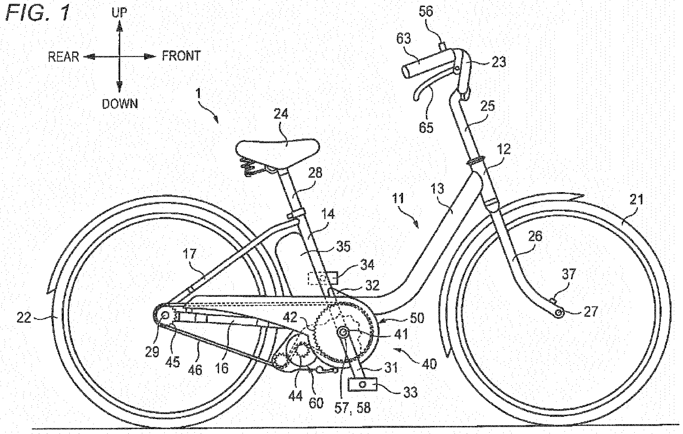

Hereinafter, referring to Fig. 1, an embodiment will be described. Dimensions of constituent elements in Figures do not always represent truly actual dimensions of the constituent elements and dimensional ratios of the constituent elements.

In the following description, front, rear, left and right mean front, rear, left and right as viewed from a rider who is seated on a seat 24 of an electrically assisted bicycle while gripping on handgrips of a handlebar 23.

### [First Embodiment]

Firstly, an electrically assisted bicycle according to a first embodiment will be described. <Overall Configuration of Electrically Assisted Bicycle>

As shown in Fig. 1, an electrically assisted bicycle 1 has pedals 33, 34 and an electric motor 60. This electrically assisted bicycle 1 is driven by a total of drive torque of a pedal torque generated by a rider depressing the pedals 33, 34 and a motor torque outputted from the electric motor 60. The motor torque of the electric motor 60 constitutes assisting torque which assists the rider in depressing the pedals 33, 34. Additionally, in this electrically assisted bicycle 1, the electric motor 60 can impart assisting torque to a rear wheel 22 which assists the rider in pushing the bicycle while walking with the handlebar 23 gripped on by the rider or walk-push assisting torque.

The electrically assisted bicycle 1 has a body frame 11 which extends in a front-to-rear direction. The electrically assisted bicycle 1 also has a front wheel 21, the rear wheel 22, the handlebar 23, a saddle or seat 24 and a power unit 40.

The body frame 11 has a head tube 12, a down tube 13, a seat tube 14, a pair of chain stays 16 and a pair of seat stays 17. The head tube 12 is disposed at a front portion of the electrically assisted bicycle 1. A front portion of the down tube 13 which extends to the rear is connected to the head tube 12. The seat tube 14 is connected to a rear portion of the down tube 13. The seat tube 14 extends obliquely upwards and rearwards from a rear end portion of the down tube 13.

A handlebar stem 25 is inserted into the head tube 12 so as to turn freely. The handlebar 23 is fixed to an upper end portion of the handlebar stem 25. A front fork 26 is fixed to a lower end portion of the handlebar stem 25. The front wheel 21 is supported rotatably at a lower end portion of the front fork 26 by an axle shaft 27. A front wheel speed sensor 37 is provided at the lower end portion of the front fork 26 to detect a vehicle speed from rotations of the front wheel 21.

A seat post 28 is inserted into the cylindrical seat tube 14. The seat 24 is provided at an upper end portion of the seat post 28.

The pair of chain stays 16 are provided so as to hold the rear wheel 22 therebetween from the left and right of the rear wheel 22. The pair of chain stays 16 extend from a rear portion of the down tube 13 towards a rotational center of the rear wheel 22. The pair of seat stays 17 extend from an upper portion of the seat tube 14 towards the rotational center of the rear wheel 22. The rear wheel 22 is supported rotatably at rear end portions of the chain stays 16 and the seat stays 17.

A battery 35 is disposed at the rear of the seat tube 14, and this battery 35 supplies electric power to the electric motor 60 of the power unit 40. The battery 35 has a chargeable-dischargeable rechargeable battery and a battery control unit, which are not shown. The battery control unit controls the charging and discharging of the rechargeable battery and monitors an output current from the battery and a residual capacity or the state of charge of the rechargeable battery.

The power unit 40 includes a crank shaft 41, a crank output shaft (not shown), a driving sprocket 42, a pedal torque detection unit 57, a crank rotation detection unit 58, the electric motor 60 and an auxiliary sprocket 44 which are incorporated in a unit case 50 as a unit. The power unit 40 is fastened to the body frame 11 with bolts.

The crank shaft 41 is provided rotatably below the seat tube 14. The crank shaft 41 penetrates the unit case 50 in a left-to-right direction to be supported thereon. Crank arms 31, 32 are attached to both end portions of the crank shaft 41. The pedals 33, 34 are attached individually to distal ends of the crank arms 31, 32 in a rotatable fashion. The pedal torque detection unit 57 detects a pedal torque which the rider inputs into the crank shaft 41 via the pedals 33, 34. The crank rotation detection unit 58 detects a rotation of the crank shaft 41 which is generated when the rider rotates the pedals 33, 34. A crank output shaft (not shown) is formed into a cylindrical shape which is concentric with the crank shaft 41 and is connected to the crank shaft 41 via a one-way clutch, not shown.

The drive sprocket 42 is attached to a right end of the crank output shaft (not shown). This drive sprocket 42 rotates together with the crank shaft 41. A driven sprocket 45 is provided concentrically with a rear axle shaft 29 of the rear wheel 22. The driven sprocket 45 is connected to the rear wheel 22 via a one-way clutch, not shown.

An endless chain 46 is extended between the drive sprocket 42 and the driven sprocket 45 so as to wrap them around. This allows the drive sprocket 42 to rotate when the rider rotates the pedals 33, 34 with his or her feet. Further, the rotation of the drive sprocket 42 is transmitted to the driven sprocket 45 by way of the chain 46 to thereby drive the rear wheel 22.

The electric motor 60 is disposed at the rear of the crank shaft 41 within the unit case 50. The auxiliary sprocket 44 is provided on an output shaft of the electric motor 60. Electric power is supplied to the electric motor 60 from the battery 35. Supplying electric power to the electric motor 60 starts the electric motor 60 to rotate. The rotation of the electric motor 60 is transmitted to the chain 46 by way of the auxiliary sprocket 44. In this way, when electric power is supplied to the electric motor 60, motor torque is generated in the electric motor 60. This motor torque is transmitted to the rear wheel 22 via the chain 46.

Grip portions 63 are provided at left and right end portions of the handlebar 23. The grip portions 63 extend substantially in a front-to-rear direction. The rider can grip on these grip portions 63.

Brake levers 65 are provided near the grip portions 63. When the rider operates the right brake lever 65 with his or her right hand, a braking force is applied to the front wheel 21. When the rider operates the left brake lever 65 with his or her left hand, a braking force is applied to the rear wheel 22.

An operating unit 56 is provided near the grip portion 63 on the handlebar 23. The operating unit 56 can be operated by a finger of a hand of the rider by which the rider grips on the grip portion 63. The operating unit 56 is connected to a control unit 100 including a motor control module 95, which will be described later, via a signal line (whose illustration is omitted). The operating unit 56 has a first operating module 71 and a second operating module 72, which will be described later, configured to be individually switched on/off.

In the electrically assisted bicycle 1 configured in the way described above, the electric motor 60 is controlled by the control unit 100 to apply motor torque to the rear wheel 22.

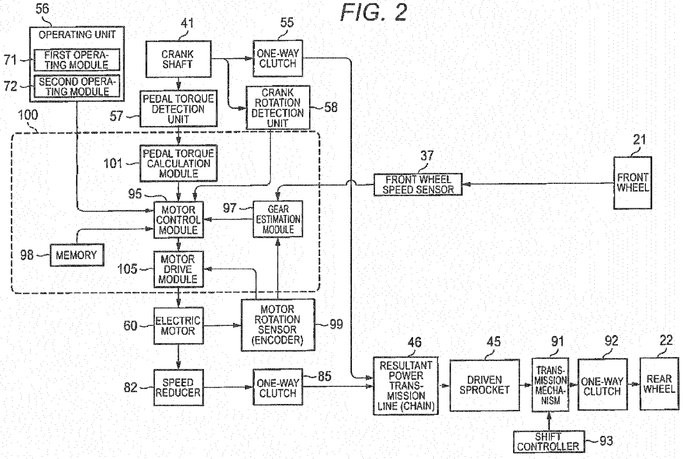

Fig. 2 is a block diagram showing the function of the electrically assisted bicycle 1. As shown in Fig. 2, the control unit 100 includes a pedal torque calculation module 101, the motor control module 95, a motor drive module 105, a gear estimation module 97 and a memory 98. The operating unit 56 is connected to the motor control module 95. This operating unit 56 has the first operating module 71 and the second operating module 72.

### <Power Transmission Line>

Next, a power transmission line will be described.

When the rider depresses the pedals 33, 34 to rotate the crank shaft 41, the rotation of the crank shaft 41 is transmitted to the chain 46 by way of the one-way clutch 55. The one-way clutch 55 transmits only a forward rotation of the crank shaft 41 to the chain 46 and does not transmit a reverse rotation of the crank shaft 41 to the chain 46.

The rotation of the chain 46 is transmitted to the driven sprocket 45 on the rear wheel 22 side. The rotation of the driven sprocket 45 is transmitted to the rear wheel 22 by way of a transmission mechanism 91 and a one-way clutch 92.

The transmission mechanism 91 can change speed gears in response to the operation of a shift controller 93 by the rider. The one-way clutch 92 transmits the rotation of the driven sprocket 45 to the rear wheel 22 only when the rotation speed of the driven sprocket 45 is faster than the rotation speed of the rear wheel 22. When the rotation speed of the driven sprocket 45 is slower than the rotation speed of the rear wheel 22, the one-way clutch 92 does not transmit the rotation of the driven sprocket 45 to the rear wheel 22.

The rotation of the electric motor 60 is transmitted to a one-way clutch 85 via a speed reducer 82. The one-way clutch 85 transmits only the rotation of the electric motor 60 in a direction in which the speed reducer 82 rotates the chain 46 forwards to the chain 46 but does not transmit the rotation of the electric motor 60 in a direction in which the seed reducer 82 rotates the chain 46 reversely to the chain 46.

In this way, in the electrically assisted bicycle 1 according to the embodiment, the pedal torque inputted into the crank shaft 41 and the motor torque of the electric motor 60 are combined together at the chain 46.

### <Signal Lines>

Next, signal lines will be described.

When the rider rotates the crank shaft 41, the pedal torque detection unit 57 which is provided on the vehicle generates a signal corresponding to the pedal torque inputted into the crank shaft 41. The pedal torque detection unit 57 inputs the signal into the pedal torque calculation module 101.

The pedal torque calculation module 101 converts the signal from the pedal torque detection unit 57 into the pedal torque exerted on the pedals 33, 34 by the rider. The pedal torque calculation module 101 inputs the value of the pedal toque into the motor control module 95.

The crank rotation detection unit 58 is a sensor for detecting the phase of the crank shaft 41. The crank rotation detection unit 58 generates a signal corresponding to the phase of the crank shaft 41. The crank rotation detection unit 58 inputs the signal into the motor control module 95.

The front wheel speed sensor 37 transmits a signal which signals the rotation speed of the front wheel 21 to the gear estimation module 97. The gear estimation module 97 estimates a gear from the rotation speed of the front wheel 21 and transmits the information thereon to the motor control module 95.

A motor rotation sensor 99 is provided on the electric motor 60. This motor rotation sensor 99 detects a revolution speed of the electric motor 60 and transmits the revolution speed so detected to the gear estimation module 97 and the motor drive module 105.

The motor control module 95 calculates a command value for applying an appropriate assisting force from outputs from the pedal torque calculation module 101, the crank rotation detection unit 58 and the gear estimation module 97 and information stored in the memory 98 and transmits the command value so calculated to the motor drive module 105.

The motor torque control module 95 calculates the command value based on, for example, the crank rotation speed or the pedal torque given to the pedals 33, 34 by the rider or by referring to a map stored in the memory 98 which is prepared based on a relationship among the crank rotation speed, the pedal torque and the motor torque.

The motor drive module 105 supplies based on the command value from the motor control module 95 electric power corresponding to the command value to the electric motor 60 from the battery 35. This drives the electric motor 60 to which the electric power is so supplied to generate predetermined motor torque.

In the electrically assisted bicycle 1 according to this embodiment, the motor control module 95 controls the electric motor 60 in four modes (a first mode, a second mode, a third mode, a fourth mode) which differ from one another.

The first mode is a mode in which the electric motor 60 applies no torque to the rear wheel 22. In the first mode, the motor control module 95 outputs no command value to the motor drive module 105, the electric motor 60 is not energized, and the electric motor 60 applies no torque to the rear wheel 22.

Alternatively, in the first mode, the motor control module 95 may be configured to output a command to the motor drive module 105. The first mode includes a state in which the electric motor 60 is energized so as to output such minute torque that the torque outputted from the electric motor 60 is lost while being transmitted to the rear wheel 22 by way of the speed reducer 82, the one-way clutch 85, the chain 46, the driven sprocket 45, the transmission mechanism 91 and the one-way clutch 92, whereby no torque is applied to the rear wheel 22.

The second mode is such that the electric motor 60 applies to the rear wheel 22 stay assisting torque which is good enough to allow the electrically assisted bicycle 1 to stay in a position where the rider wants to stay. In the second mode, the motor control module 95 outputs a stay command value to the motor drive module 105. This causes the electric motor 60 to apply stay assisting torque to the rear wheel 22, whereby the electrically assisted bicycle 1 can stay in the position where the rider wants to stay. In the second mode, the electrically assisted bicycle 1 can stay in the position, for example, even on an upward slope without moving backwards.

The second mode is executed by controlling the electric motor 60 so that the revolution speed of the electric motor 60 becomes zero, for example. The motor control module 95 obtains a rotation of a rotor of the electric motor 60 from the motor rotation sensor 99 of the electric motor 60. The motor control module 95 calculates a stay command value so that stay assisting torque is generated which matches an angular acceleration of the electric motor 60. The motor control module 95 transmits the stay command value so calculated to the motor drive module 105. The motor drive module 105 supplies electric power corresponding to the stay command value to the electric motor 60. This applies the stay assisting torque which attempts to cause the electrically assisted bicycle 1 to stay in the position to the rear wheel 22.

Alternatively, a configuration may be adopted in which an inclination sensor configured to detect an inclination angle of the bicycle with respect to a vertical direction of a road surface is equipped on the electrically assisted bicycle 1, so that a stay assisting force is calculated in response to an output from the inclination sensor. For example, the electrically assisted bicycle 1 is allowed to stay in the position by calculating a greater stay assisting force as the inclination angle becomes greater.

The third mode is a mode in which the electric motor 60 applies walk-push assisting torque to the rear wheel 22. In the third mode, the motor control module 95 outputs a walk-push command value to the motor drive module 105. This causes the electric motor 60 to apply walk-push assisting torque to the rear wheel 22. Then, the walk-push assisting torque is applied to the rear wheel 22 of the electrically assisted bicycle 1. It should be noted that the motor control module 95 can calculated the walk-push command value according to parameters such as the vehicle speed at that time, the degree of gradient of the upward slope, the vehicle weight, the steering torque and the like, for example. The motor control module 95 may calculate a walk-push command value so that the electrically assisted vehicle 1 is propelled at a predetermined speed, for example, a speed of 6 km/h which is the walking speed of a human being.

The fourth mode is a mode in which the electrically assisted motor 60 applies propelling assisting toque which assists the electrically assisted bicycle 1 to be propelled to the rear wheel 22. The fourth mode is such that the electric motor 60 is caused to apply torque so as to assist with the pedal torque exerted by the rider while the electrically assisted bicycle 1 is being propelled. Since the fourth mode is a control executed in a general electrically assisted bicycle, the detailed description thereof will be omitted here.

The electrically assisted bicycle 1 according to this embodiment is configured to switch the modes among the first mode, the second mode and the third mode by the operation of the operating unit 56. The operating unit 56 includes the first operating module 71 and the second operating module 72. It should be noted that the fourth mode may be configured to be selected by the operation of the operating unit 56 or may be configured to be operated by an operating unit which differs from the operating unit 56.

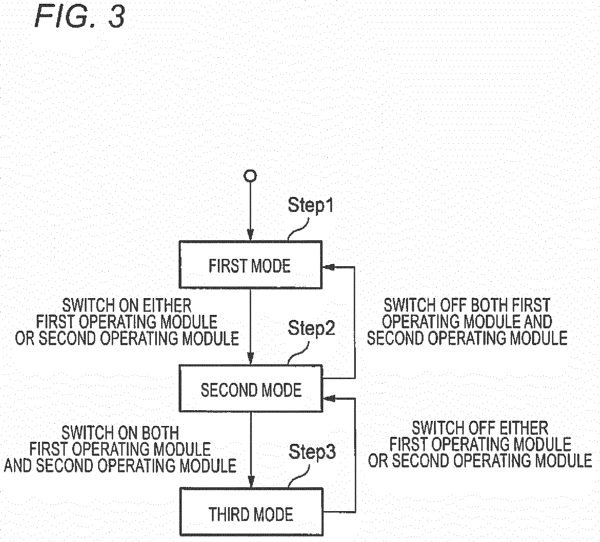

Fig. 3 is a flowchart showing a selecting operation of selecting the first mode to the third mode in the electrically assisted bicycle 1 according to this embodiment. In the electrically assisted vehicle 1 according to this embodiment, the first mode to the third mode can be selected by switching on/off the first operating module 71 and the second operating module 72 of the operating unit 56.

When the rider switches on the first operating module 71 of the operating unit 56, the first operating module 71 transmits an ON signal to the motor control module 95. When the rider switches on the second operating module 72 of the operating unit 56, the second operating module 72 transmits an ON signal to the motor control module 95.

As shown in step 1 in Fig. 3, the motor control module 95 executes the first mode immediately after a power supply of the vehicle is switched on. In addition, in the case of the motor control module 95 receiving no ON signal from both the first operating module 71 and the second operating module 72, that is, in the case of neither of the first operating module 71 and the second operating module 72 being operated to remain switched off, the motor control module 95 executes the first mode.

In the first mode, when the motor control module 95 receives an ON signal from either of the first operating module 71 and the second operating module 72, that is, when either the first operating module 71 or the second operating module 72 is operated to be switched on, the motor control module 95 cancels the first mode and executes the second mode (step 2).

In the second mode, when the motor control module 95 comes to receive the ON signal from neither of the first operating module 71 and the second operating module 72, that is, when both the first operating module 71 and the second operating module 72 are switched off, the motor control module 95 cancels the second mode and executes the first mode. This puts the electrically assisted bicycle 1 in such a state that no torque is applied to the rear wheel 22 from the electric motor 60.

In the second mode, when the motor control module 95 receives ON signals from both the first operating module 71 and the second operating module 72, that is, when both the first operating module 71 and the second operating module 72 are switched on, the motor control module 95 cancels the second mode and executes the third mode (step 3).

In the third mode, when the motor control module 95 comes not to receive the ON signal from either the first operating module 71 or the second operating module 72, that is, when either of the first operating module 71 and the second operating module 72 is switched off while the other remains switched on, the motor control module 95 cancels the third mode and executes the second mode.

In addition, in the second mode, when the motor control module 95 comes to receive the ON signal from neither of the first operating module 71 and the second operating module 72, that is, when both the first operating module 71 and the second operating module 72 are switched off, the motor control module 95 cancels the second mode and executes the first mode.

In this way, in the electrically assisted bicycle 1 according to the first embodiment, the first mode, the second mode and the third mode can be selected by the rider operating the operating unit 56. Namely, the rider can select the first mode, the second mode and the third mode in a positive fashion. Owing to this, when the rider wants to say in a certain position on an upward slope, the rider can easily execute the second mode. Alternatively, when the rider wants to move backwards on the upward slope, the rider can easily move backwards by selecting the first mode. Alternatively, when the rider attempts to propel the bicycle from the staying state by pushing it while walking on the upward slope, the rider can obtain the walk-push assisting torque by executing easily the third mode by operating the operating unit 56. In this way, since the rider can select the first mode, the second mode and the third mode in the positive fashion, the output of the electric motor 60 does not interrupt the action that the rider wants to execute, whereby the rider can select the mode which is suitable for the action that the rider wants to execute.

Particularly, in the electrically assisted bicycle 1 configured as described above, when the rider operates the first operating module 71 or the second operating module 72 without selecting either of the first module 71 and the second module 72, the stay assisting torque is applied which allows the bicycle to stay in the position where the rider wants to stay, whereby the rider can easily stay with the bicycle in the position, and the convenience of the rider is enhanced.

### <Second embodiment>

In the embodiment described above, while the modes are described as being selected by operating the first operating module 71 and the second operating module 72 of the operating unit 56, the present teaching is not limited thereto. Next, a second embodiment will be described. Like reference numerals will be given to like constituent portions to those of the first embodiment, and the description thereof will be omitted.

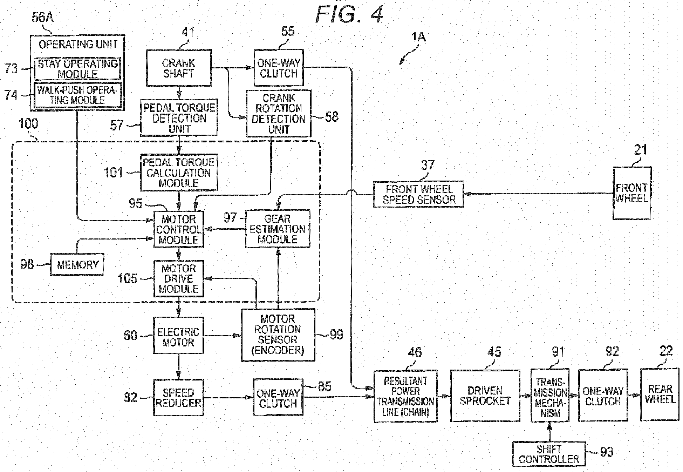

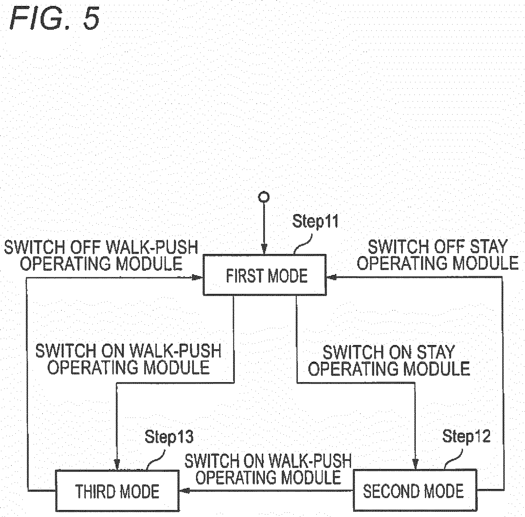

Fig. 4 is a block diagram showing the function of an electrically assisted bicycle 1A according to a second embodiment. Fig. 5 is a flowchart showing a selecting operation of selecting a first mode to a third mode in the electrically assisted bicycle 1A according to the second embodiment.

As shown in Fig. 4, in the electrically assisted bicycle 1A according to the second embodiment, an operating unit 56A has a stay operating module 73 and a walk-push operating module 74.

In the electrically assisted vehicle 1A, a first mode to a third mode can be selected by switching on/off the stay operating module 73 and the walk-push operating module 74 of the operating unit 56A. When the rider switches on the stay operating module 73 of the operating unit 56A, the stay operating module 73 transmits an ON signal to a motor control module 95. When the rider switches on the walk-push operating module 74 of the operating unit 56A, the walk-push operating module 74 transmits an ON signal to the motor control module 95.

As shown in Fig. 5, when a power supply of the vehicle is switched on, the motor control module 95 executes the first mode (step 11). In addition, in the case of the motor control module 95 receiving no ON signal from both the stay operating module 73 and the walk-push operating module 74, that is, in the case of neither of the stay operating module 73 and the walk-push operating module 74 being operated to remain switched off, the motor control module 95 executes the first mode.

In the first mode, in the case of the motor control module 95 receiving no ON signal from the walk-push operating module 74 but receiving an ON signal from the stay operating module 73, that is, in the case of the walk-push operating module 74 being not operated to remain switched off but the stay operating module 73 being operated to be switched on, the motor control module 95 cancels the first mode and executes the second mode (step 12). This causes the motor control module 95 to output a stay command value to the motor drive module 105.

In the second mode, when the motor control module 95 receives an ON signal from neither of the stay operating module 73 and the walk-push operating module 74, that is, when both the stay operating module 73 and the walk-push operating module 74 are switched off, the motor control module 95 cancels the second mode and executes the first mode.

In the first mode, when the motor control module 95 receives an ON signal from the walk-push operating module 74, that is, when the walk-push operating module 74 is switched on, the motor control module 95 cancels the first mode and executes the third mode (step 13).

Similarly, in the second mode, too, when the motor control module 95 receives an ON signal from the walk-push operating module 74, that is, when the walk-push operating module 74 is switched on, the motor control module 95 cancels the second mode and executes the third mode.

When the third mode is executed, the motor control module 95 outputs a walk-push command value to a motor drive module 105, and an electric motor 60 applies walk-push assisting torque to a rear wheel 22. Then, the walk-push assisting torque is applied to the rear wheel 22 of the electrically assisted bicycle 1.

In the third mode, when the motor control module 95 comes not to receive then ON signal from the walk-push operating module 74, that is, when the walk-push operating module 74 is switched off, the motor control module 95 cancels the third mode and executes the first mode.

In this way, in the electrically assisted bicycle 1A according to the second embodiment, the motor control module 95 executes the third mode when the walk-push operating module 74 is operated irrespective of the operation of the stay operating module 73. Consequently, the walk-push assisting torque can be obtained as soon as the rider wants to have the walk-push assisting torque.

### <Third non-claimed embodiment>

Next, a third non-claimed embodiment will be described. Like reference numerals will be given to like constituent portions to those of the first embodiment, and the description thereof will be omitted.

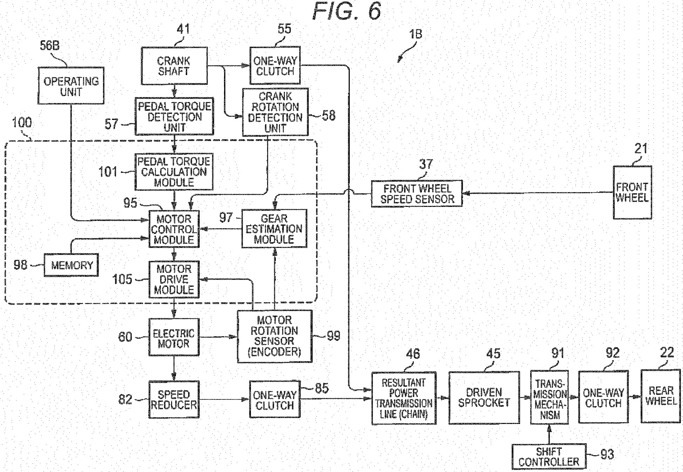

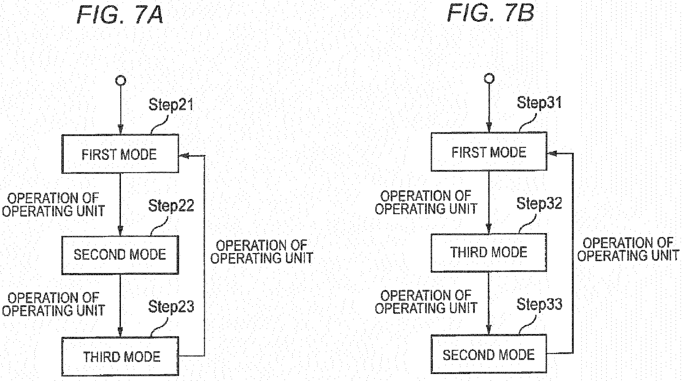

Fig. 6 is a block diagram showing the function of an electrically assisted bicycle 1B according to a third non-claimed embodiment. Fig. 7 is a flowchart showing a selecting operation of selecting a first mode to a third mode in the electrically assisted bicycle 1B according to the third non-claimed embodiment.

As shown in Fig. 6, in the electrically assisted bicycle 1B according to third non-claimed embodiment, a single operating unit 56B is provided. The operating unit 56B is, for example, a switch which outputs an ON signal while being kept depressed.

In the electrically assisted bicycle 1B, a first mode to a third mode can be selected by operating the operating unit 56B. When the rider operates the operating unit 56B, the operating unit 56B transmits an ON signal to a motor control module 95. Then, the motor control module 95 shifts the first mode, the second mode and the third mode in a predetermined order in response to the reception of an ON signal from the operating unit 56B.

Next, examples of shifting the modes from the first mode to the third mode by the operating unit 56B in the electrically assisted bicycle 1B will be described.

### (Mode Shifting Example 1)

Fig. 7A is a flowchart showing a shifting example 1. As shown in Fig. 7A, in this shifting example 1, when a power supply of the vehicle is switched on, the first mode is selected. After the power supply of the vehicle is switched on, the motor control module 95 switches the modes sequentially in the order of the first mode, the second mode and the third mode every time the motor control module 95 receives an ON signal from the operating unit 56B. When the motor control module 95 receives an ON signal from the operating unit 56B at the time of selecting the third mode, the motor control module 95 executes the first mode.

### (Mode Shifting Example 2)

Alternatively, the motor control module 95 may shift the modes as in a shifting example 2 in place of the shifting example 1.

Fig. 7B is a flowchart showing the shifting example 2. As shown in Fig. 7B, in this shifting example 2, when the power supply of the vehicle is switched on, the first mode is selected. After the power supply of the vehicle is switched on, the motor control module 95 switches the modes sequentially in the order of the first mode, the third mode and the second mode every time the motor control module 95 receives an ON signal from the operating unit 56B. When the motor control module 95 receives an ON signal from the operating unit 56B at the time of selecting the second mode, the motor control module 95 executes the first mode.

In this way, in the electrically assisted bicycle 1B according to the third non-claimed embodiment, since the rider can select the first mode to the third mode by operating the single operating unit 56B, the rider can select the modes through the simple operation.

In the first , second , and third non-claimed embodiments, while the vehicle is described in which the assisting torque is applied to the rear wheel 22, a configuration may be adopted in which the assisting torque is applied to the front wheel 21.

### [Description of Reference Numerals]

- 1, 1A, 1B:: electrically assisted vehicle;
- 22:: rear wheel (wheel);
- 56, 56A, 56B:: operating unit;
- 60:: electric motor;
- 71:: first operating module;
- 72:: second operating module;
- 73:: stay operating module;
- 74:: walk-push operating module;
- 95:: motor control module (control unit).

## Claims

1. An electrically assisted bicycle comprising:
an electric motor (60) which is adapted to apply a walk-push assisting torque to a wheel (22) of the bicycle (1, 1A, 1B) when a rider propels the bicycle (1, 1A, 1B) by pushing it while walking;
a control unit (95) configured to execute a first mode in which the electric motor (60) applies no torque to the wheel (22), a second mode in which the electric motor (60) applies to the wheel (22) a stay assisting torque which allows the electrically assisted bicycle (1, 1A, 1B) to stay in a position where the rider wants to stay and a third mode in which the electric motor (60) applies the walk-push assisting torque to the wheel (22),
wherein
the first mode, the second mode and the third mode are able to be selected by using an operating unit (56, 56A, 56B) which is operable by the rider, wherein
the operating unit (56) has a first operating module (71) and a second operating module (72) which differs from the first operating module (71), wherein
the control unit (95) is configured to execute the first mode when the first operating module (71) and the second operating module (72) are not operated, wherein
the control unit (95) is configured to execute the second mode in such a state that the first operating module (71) or the second operating module (72) is operated, and **characterized in that** the control unit (95) is configured to execute the third mode in such a state that the first operating module (71) and the second operating module (72) are operated.

2. An electrically assisted bicycle comprising:an electric motor (60) which is adapted to apply a walk-push assisting torque to a wheel (22) of the bicycle (1, 1A, 1B) when a rider propels the bicycle (1, 1A, 1 B) by pushing it while walking;a control unit (95) configured to execute a first mode in which the electric motor (60) applies no torque to the wheel (22), a second mode in which the electric motor (60) applies to the wheel (22) a stay assisting torque which allows the electrically assisted bicycle (1, 1A, 1B) to stay in a position where the rider wants to stay and a third mode in which the electric motor (60) applies the walk-push assisting torque to the wheel (22), wherein the first mode, the second mode and the third mode are able to be selected by using an operating unit (56, 56A, 56B) which is operable by the rider, wherein the operating unit (56A) has a stay operating module (73) and a walk-push operating module (74), wherein the control unit (95) is configured to execute the first mode when the stay operating module (73) and the walk-push operating module (74) are not operated, wherein the control unit (95) is configured to execute the second mode when the walk-push operating module (74) is not operated while the stay operating module (73) is operated, and **characterized in that** the control unit (95) is configured to execute the third mode when the walk-push operating module (74) is operated irrespective of the operation of the stay operating module (73).

3. A method for controlling an electrically assisted bicycle having an electric motor (60) which is adapted to apply a walk-push assisting torque to a wheel (22) of the bicycle (1, 1A, 1B) when a rider propels the bicycle (1, 1A, 1B) by pushing it while walking, the method comprises:
executing a first mode in which the electric motor (60) applies no torque to the wheel (22), a second mode in which the electric motor (60) applies to the wheel (22) a stay assisting torque which allows the electrically assisted bicycle (1, 1A, 1B) to stay in a position where the rider wants to stay and a third mode in which the electric motor (60) applies the walk-push assisting torque to the wheel (22), wherein
the first mode, the second mode and the third mode are selected by using an operating unit (56, 56A, 56B) which is operable by the rider, wherein
the operating unit (56) has a first operating module (71) and a second operating module (72) which differs from the first operating module (71), the method comprises:
executing the first mode when the first operating module (71) and the second operating module (72) are not operated, wherein
executing the second mode in such a state that the first operating module (71) or the second operating module (72) is operated, an **characterized by** executing the third mode in such a state that the first operating module (71) and the second operating module (72) are operated.

4. A method for controlling an electrically assisted bicycle having an electric motor (60) which is adapted to apply a walk-push assisting torque to a wheel (22) of the bicycle (1, 1A, 1B) when a rider propels the bicycle (1, 1A, 1B) by pushing it while walking, the method comprises:executing a first mode in which the electric motor (60) applies no torque to the wheel (22), a second mode in which the electric motor (60) applies to the wheel (22) a stay assisting torque which allows the electrically assisted bicycle (1, 1A, 1B) to stay in a position where the rider wants to stay and a third mode in which the electric motor (60) applies the walk-push assisting torque to the wheel (22), wherein the first mode, the second mode and the third mode are selected by using an operating unit (56, 56A, 56B) which is operable by the rider, wherein the operating unit (56A) has a stay operating module (73) and a walk-push operating module (74), the method comprises:executing the first mode when the stay operating module (73) and the walk-push operating module (74) are not operated, wherein executing the second mode when the walk-push operating module (74) is not operated while the stay operating module (73) is operated, and **characterized by** executing the third mode when the walk-push operating module (74) is operated irrespective of the operation of the stay operating module (73).

## Patentansprüche

1. Ein elektrisch unterstütztes Fahrrad, das umfasst:
einen Elektro-Motor (60), der so ausgelegt ist, dass er ein Lauf-Schiebe-Unterstützungs-Moment auf ein Rad (22) des Fahrrads (1, 1A, 1B) ausübt, wenn ein Fahrer das Fahrrad (1, 1A, 1B) antreibt, indem er es beim Gehen schiebt;
eine Steuer-Einheit (95), die konfiguriert ist, um einen ersten Modus, in dem der Elektro-Motor (60) kein Drehmoment auf das Rad (22) ausübt, einen zweiten Modus, in dem der Elektro-Motor (60) auf das Rad (22) ein Steh-Unterstützungs-Moment ausübt,
das es dem elektrisch unterstützten Fahrrad (1, 1 A, 1B) ermöglicht, in einer Position zu bleiben, in welcher der Fahrer bleiben möchte, und einen dritten Modus, in dem der Elektro-Motor (60) das Lauf-Schiebe-Unterstützungs-Moment auf das Rad (22) ausübt, auszuführen, wobei
der erste Modus, der zweite Modus und der dritte Modus durch Verwendung einer Bedienungs-Einheit (56, 56A, 56B), die durch den Fahrer bedienbar ist, ausgewählt werden können, wobei
die Bedienungs-Einheit (56) hat ein erstes Bedienungs-Modul (71) und ein zweites Bedienungs-Modul (72), das sich von dem ersten Bedienungs-Modul (71) unterscheidet, wobei
die Steuer-Einheit (95) konfiguriert ist, um den ersten Modus auszuführen, wenn das erste Bedienungs-Modul (71) und das zweite Bedienungs-Modul (72) nicht betrieben sind, wobei
die Steuer-Einheit (95) konfiguriert ist, um den zweiten Modus in einem solchen Zustand auszuführen, in dem das erste Bedienungs-Modul (71) oder das zweite Bedienungs-Modul (72) betrieben ist, und **dadurch gekennzeichnet, dass** die Steuer-Einheit (95) konfiguriert ist, den dritten Modus in einem solchen Zustand auszuführen, in dem das erste Bedienungs-Modul (71) und das zweite Bedienungs-Modul (72) betrieben sind.

2. Ein elektrisch unterstütztes Fahrrad, das umfasst:
einen Elektro-Motor (60), der so ausgelegt ist, dass er ein Lauf-Schiebe-Unterstützungs-Moment auf ein Rad (22) des Fahrrads (1, 1A, 1B) ausübt, wenn ein Fahrer das Fahrrad (1, 1A, 1B) antreibt, indem er es beim Gehen schiebt;
eine Steuer-Einheit (95), die konfiguriert ist, um einen ersten Modus, in dem der Elektro-Motor (60) kein Drehmoment auf das Rad (22) ausübt, einen zweiten Modus, in dem der Elektro-Motor (60) auf das Rad (22) ein Steh-Unterstützungs-Moment ausübt, das es dem elektrisch unterstützten Fahrrad (1, 1 A, 1B) ermöglicht, in einer Position zu bleiben, in welcher der Fahrer bleiben möchte, und einen dritten Modus, in dem der Elektro-Motor (60) das Lauf-Schiebe-Unterstützungs-Moment auf das Rad (22) ausübt, auszuführen, wobei
der erste Modus, der zweite Modus und der dritte Modus durch Verwendung einer Bedienungs-Einheit (56, 56A, 56B), die durch den Fahrer bedienbar ist, ausgewählt werden können, wobei
die Bedienungs-Einheit (56A) ein Steh-Bedienungs-Modul (73) und ein Geh-Schub-Bedienungs-Modul (74) hat, wobei die Steuer-Einheit (95) konfiguriert ist, um den ersten Modus auszuführen, wenn das Steh-Bedienungs-Modul (73) und das Geh-Schub-Bedienungs-Modul (74) nicht betätigt sind, wobei die Steuer-Einheit (95) konfiguriert ist, um den zweiten Modus auszuführen, wenn das Geh-Schub-Bedienungs-Modul (74) nicht betätigt ist, während das Steh-Bedienungs-Modul (73) betätigt ist, und **dadurch gekennzeichnet, dass** die Steuer-Einheit (95) konfiguriert ist, um den dritten Modus auszuführen, wenn das Geh-Schub-Bedienungs-Modul (74) betätigt ist, ungeachtet von der Betätigung des Steh-Bedienungs-Moduls (73).

3. Verfahren zum Steuern eines elektrisch unterstützten Fahrrads, das einen Elektro-Motor (60) hat, der so ausgelegt ist, dass er ein Lauf-Schiebe-Unterstützungs-Moment auf ein Rad (22) des Fahrrads (1, 1A, 1B) ausübt, wenn ein Fahrer das Fahrrad (1, 1A, 1B) antreibt, indem er es beim Gehen schiebt, das Verfahren umfasst:
Ausführen eines ersten Modus, in dem der Elektro-Motor (60) kein Drehmoment auf das Rad (22) ausübt, einen zweiten Modus, in dem der Elektro-Motor (60) auf das Rad (22) ein Steh-Unterstützungs-Moment ausübt, das es dem elektrisch unterstützten Fahrrad (1, 1 A, 1B) ermöglicht, in einer Position zu bleiben, in welcher der Fahrer bleiben möchte, und einen dritten Modus, in dem der Elektro-Motor (60) das Lauf-Schiebe-Unterstützungs-Moment auf das Rad (22) ausübt, wobei der erste Modus, der zweite Modus und der dritte Modus durch Verwendung einer Bedienungs-Einheit (56, 56A, 56B), die durch den Fahrer bedienbar ist, ausgewählt werden, wobei
die Bedienungs-Einheit (56) hat ein erstes Bedienungs-Modul (71) und ein zweites Bedienungs-Modul (72), das sich von dem ersten Bedienungs-Modul (71) unterscheidet, das Verfahren umfasst:
Ausführen des ersten Modus, wenn das erste Bedienungs-Modul (71) und das zweite Bedienungs-Modul (72) nicht betrieben sind, wobei
Ausführen des zweiten Modus in einem solchen Zustand, in dem das erste Bedienungs-Modul (71) oder das zweite Bedienungs-Modul (72) betrieben ist, und **gekennzeichnet durch**
Ausführen des dritten Modus in einem solchen Zustand, in dem das erste Bedienungs-Modul (71) und das zweite Bedienungs-Modul (72) betrieben sind.

4. Verfahren zum Steuern eines elektrisch unterstützten Fahrrads, das einen Elektro-Motor (60) hat, der so ausgelegt ist, dass er ein Lauf-Schiebe-Unterstützungs-Moment auf ein Rad (22) des Fahrrads (1, 1A, 1B) ausübt, wenn ein Fahrer das Fahrrad (1, 1A, 1B) antreibt, indem er es beim Gehen schiebt, das Verfahren umfasst:
Ausführen eines ersten Modus, in dem der Elektro-Motor (60) kein Drehmoment auf das Rad (22) ausübt, einen zweiten Modus, in dem der Elektro-Motor (60) auf das Rad (22) ein Steh-Unterstützungs-Moment ausübt, das es dem elektrisch unterstützten Fahrrad (1, 1 A, 1B) ermöglicht, in einer Position zu bleiben, in welcher der Fahrer bleiben möchte, und einen dritten Modus, in dem der Elektro-Motor (60) das Lauf-Schiebe-Unterstützungs-Moment auf das Rad (22) ausübt, wobei der erste Modus, der zweite Modus und der dritte Modus durch Verwendung einer Bedienungs-Einheit (56, 56A, 56B), die durch den Fahrer bedienbar ist, ausgewählt werden, wobei
die Bedienungs-Einheit (56) hat ein erstes Bedienungs-Modul (71) und ein zweites Bedienungs-Modul (72), das sich von dem ersten Bedienungs-Modul (71) unterscheidet, das Verfahren umfasst:
Ausführen des ersten Modus, wenn das Steh-Bedienungs-Modul (73) und das Geh-Schub-Bedienungs-Modul (74) nicht betätigt sind, wobei
Ausführen des zweiten Modus, wenn das Geh-Schub-Bedienungs-Modul (74) nicht betätigt ist, während das Steh-Bedienungs-Modul (73) betätigt ist, und **gekennzeichnet durch**
Ausführen des dritten Modus, wenn das Geh-Schub-Bedienungs-Modul (74) betätigt ist, ungeachtet von der Betätigung des Steh-Bedienungs-Moduls (73).

## Revendications

1. Bicyclette à assistance électrique, comprenant :
un moteur électrique (60) qui est adapté pour appliquer à une roue (22) de la bicyclette (1, 1A, 1B) un couple d'assistance en poussée à pied quand le cycliste propulse la bicyclette (1, 1A, 1B) en la poussant tout en marchant ;
une unité de contrôle (95) configurée pour exécuter un premier mode où le moteur électrique (60) n'applique aucun couple à la roue (22), un deuxième mode où le moteur électrique (60) applique à la roue (22) un couple d'assistance de maintien qui permet à la bicyclette à assistance électrique (1, 1A, 1B) de se maintenir dans une position où le cycliste veut rester, et un troisième mode où le moteur électrique (60) applique à la roue (22) un couple d'assistance en poussée à pied,
dans laquelle le premier mode, le deuxième mode et le troisième mode peuvent être sélectionnés en utilisant une unité de commande (56, 56A, 56B) actionnable par le cycliste,
dans laquelle l'unité de commande (56) comporte un premier module de commande (71) et un deuxième module de commande (72), qui diffère du premier module de commande (71),
dans laquelle l'unité de contrôle (95) est configurée pour exécuter le premier mode quand le premier module de commande (71) et le deuxième module de commande (72) ne sont pas utilisés,
dans laquelle l'unité de contrôle (95) est configurée pour exécuter le deuxième mode dans un état où le premier module de commande (71) et le deuxième module de commande (72) sont utilisés, et
**caractérisée en ce que** l'unité de contrôle (95) est configurée pour exécuter le troisième mode dans un état où le premier module de commande (71) et le deuxième module de commande (72) sont utilisés.

2. Bicyclette à assistance électrique, comprenant : un moteur électrique (60) qui est adapté pour appliquer à une roue (22) de la bicyclette (1, 1A, 1B) un couple d'assistance en poussée à pied quand le cycliste propulse la bicyclette (1, 1A, 1B) en la poussant tout en marchant ; une unité de contrôle (95) configurée pour exécuter un premier mode où le moteur électrique (60) n'applique aucun couple à la roue (22), un deuxième mode où le moteur électrique (60) applique à la roue (22) un couple d'assistance de maintien qui permet à la bicyclette à assistance électrique (1, 1A, 1B) de se maintenir dans une position où le cycliste veut rester, et un troisième mode où le moteur électrique (60) applique à la roue (22) un couple d'assistance en poussée à pied, dans laquelle le premier mode, le deuxième mode et le troisième mode peuvent être sélectionnés en utilisant une unité de commande (56, 56A, 56B) actionnable par le cycliste, dans laquelle l'unité de commande (56A) comporte un module de commande de maintien (73) et un module de commande en poussée à pied (74), dans laquelle l'unité de contrôle (95) est configurée pour exécuter le premier mode quand le module de commande de maintien (73) et le module de commande en poussée à pied (74) ne sont pas utilisés, dans laquelle l'unité de contrôle (95) est configurée pour exécuter le deuxième mode quand le module de commande en poussée à pied (74) n'est pas utilisé alors que le module de commande de maintien (73) est utilisé, et **caractérisée en ce que** l'unité de contrôle (95) est configurée pour exécuter le troisième mode quand le module de commande en poussée à pied (74) est utilisé indépendamment de l'utilisation du module de commande de maintien (73).

3. Procédé de contrôle d'une bicyclette à assistance électrique comportant un moteur électrique (60) qui est adapté pour appliquer à une roue (22) de la bicyclette (1, 1A, 1B) un couple d'assistance en poussée à pied quand le cycliste propulse la bicyclette (1, 1A, 1B) en la poussant tout en marchant, dans lequel le procédé comprend :
l'exécution d'un premier mode où le moteur électrique (60) n'applique aucun couple à la roue (22), d'un deuxième mode où le moteur électrique (60) applique à la roue (22) un couple d'assistance de maintien qui permet à la bicyclette à assistance électrique (1, 1A, 1B) de se maintenir dans une position où le cycliste veut rester, et d'un troisième mode où le moteur électrique (60) applique à la roue (22) le couple d'assistance en poussée à pied,
dans lequel le premier mode, le deuxième mode et le troisième mode sont sélectionnés en utilisant une unité de commande (56, 56A, 56B) actionnable par le cycliste,
dans lequel l'unité de commande (56) comporte un premier module de commande (71) et un deuxième module de commande (72), qui diffère du premier module de commande (71),
dans lequel le procédé comprend :
l'exécution du premier mode quand le premier module de commande (71) et le deuxième module de commande (72) ne sont pas utilisés,
l'exécution du deuxième mode dans un état où le premier module de commande (71) ou le deuxième module de commande (72) est utilisé, et
**caractérisé par** l'exécution du troisième mode dans un état où le premier module de commande (71) et le deuxième module de commande (72) sont utilisés.

4. Procédé de contrôle d'une bicyclette à assistance électrique comportant un moteur électrique (60) qui est adapté pour appliquer à une roue (22) de la bicyclette (1, 1A, 1B) un couple d'assistance en poussée à pied quand le cycliste propulse la bicyclette (1, 1A, 1B) en la poussant tout en marchant, dans lequel le procédé comprend : l'exécution d'un premier mode où le moteur électrique (60) n'applique aucun couple à la roue (22), d'un deuxième mode où le moteur électrique (60) applique à la roue (22) un couple d'assistance de maintien qui permet à la bicyclette à assistance électrique (1, 1A, 1B) de se maintenir dans une position où le cycliste veut rester, et d'un troisième mode où le moteur électrique (60) applique à la roue (22) le couple d'assistance en poussée à pied, dans lequel le premier mode, le deuxième mode et le troisième mode sont sélectionnés en utilisant une unité de commande (56, 56A, 56B) actionnable par le cycliste, dans lequel l'unité de commande (56A) comporte un module de commande de maintien (73) et un module de commande en poussée à pied (74), dans lequel le procédé comprend : l'exécution du premier mode quand le module de commande de maintien (73) et le module de commande en poussée à pied (74) ne sont pas utilisés, l'exécution du deuxième mode quand le module de commande en poussée à pied (74) n'est pas utilisé alors que le module de commande de maintien (73) est utilisé, et **caractérisé par** l'exécution du troisième mode quand le module de commande en poussée à pied (74) est utilisé indépendamment de l'utilisation du module de commande de maintien (73).
